Europäisches Patentamt

(19) European Patent Office

Office européen des brevets

(11) Publication number: **0 150 568**
**B1**

(12) **EUROPEAN PATENT SPECIFICATION**

(45) Date of publication of patent specification: **19.07.89**

(21) Application number: **84307283.6**

(22) Date of filing: **23.10.84**

(51) Int. Cl.⁴: **G 02 B 6/44**

(54) **Retainer for packaged optical fiber splices and organising tray utilising such retainers.**

(30) Priority: **06.12.83 CA 442595**

(43) Date of publication of application:
**07.08.85 Bulletin 85/32**

(45) Publication of the grant of the patent:
**19.07.89 Bulletin 89/29**

(84) Designated Contracting States:
**DE FR GB SE**

(56) References cited:
**EP-A-0 043 570**
**DE-B-2 505 027**
**DE-B-2 621 852**
**US-A-4 359 262**
**US-A-4 373 776**

(73) Proprietor: **NORTHERN TELECOM LIMITED**
**1600 Dorchester Boulevard West**
**Montreal Quebec H3H 1R1 (CA)**

(72) Inventor: **Charlebois, Leonard Joseph**
**144 Paddock Way**
**Kanata Ontario, K2L 1K5 (CA)**
Inventor: **Scott, James Ronald**
**R.R. No. 2**
**Ashton Ontario, K0A 1B0 (CA)**
Inventor: **Barber, Robert John**
**11 Gingras Court**
**Kanata Ontario, K2K 1BB (CA)**

(74) Representative: **Crawford, Andrew Birkby et al**
**A.A. THORNTON & CO. Northumberland House**
**303-306 High Holborn**
**London WC1V 7LE (GB)**

# Description

This invention relates to a retainer for holding a packaged optical fiber splice and to an arrangement comprising a tray, or a plurality of trays, having retainers.

Optical fiber cables require splicing of the individual fibers at the junction of cables. The fibers are spliced, typically by fusion splicing, and the splice protected, and strengthend, by enclosing or packaging in protection members. The protection members are then positioned in a retainer in an organising tray. The tray provides room for a length of fiber either side of the splice which provides some spare length. This is bent round in the tray and the dimensions of the tray are such that the radius of the bend is large enough to prevent undue losses in the fiber.

A retainer should hold a splice in position without producing any stress on the splice. Once positioned, a splice is normally in that position for a long time and the retainer should hold the splice without being affected by climatic conditions. It has been found that moulded plastic retainers which are stressed by the insertion of a protected splice, the stress remaining as long as the splice is in position, suffer from relaxation during use. An attempt to mold an organiser tray using a stiff grade of plastic with the retainer members molded integrally but using a soft, flexible, grade of plastic, while overcoming the problem of relaxation, is extremely difficult to manufacture and is expensive.

The present invention provides a retainer for an optical fibre splice package, characterised by a web member, two pairs of cantilever members spaced apart by a first predetermined distance in a first direction along the web member and extending in a direction substantially normal thereto, the cantilever members of a pair being spaced apart by a second predetermined distance in a direction substantially transverse to the first direction and being arranged to receive a packaged splice therebetween, an inwardly extending rib at an upper part of each cantilever member, the extremities of the ribs being spaced apart a distance less than said second predetermined distance and arranged to retain the packaged splice between the cantilever members, a slot in said web extending is said first direction between the pairs of cantilever members for a distance greater than said first predetermined distance, the ribs being spaced apart from the bottom of the slot by a third predetermined distance, whereby the packaged splice can be pushed down between the cantilever members into the slot and restrained from longitudinal movement, and the ribs engaging over the packaged splice and cantilever members being substantially free from stress.

The invention will be readily understood by the following description of certain embodiments by way of example, in conjunction with the accompanying drawings, in which:-

Figure 1 is a top plan view of the centre part of a tray, with a multiple retainer member in position and fiber splices in the individual retainers;

Figure 2 is a cross-section of the retainer member only on the line II-II of Figure 1, to a larger scale with splice omitted;

Figures 3 and 4 are cross-sections through an individual retainer, without a packaged splice and with a packaged splice respectively;

Figure 5 is a perspective view of a splice in the process of being packaged or protected;

Figure 6 is a cross-section through a protected splice;

Figure 7 is a cross-section of a tray, on the line VII-VII of Figure 1;

Figure 8 is a side view of a tray;

Figure 9 is a perspective view of a tray, with retainers, illustrating the entry of fiber cables to a tray, and exit from a tray.

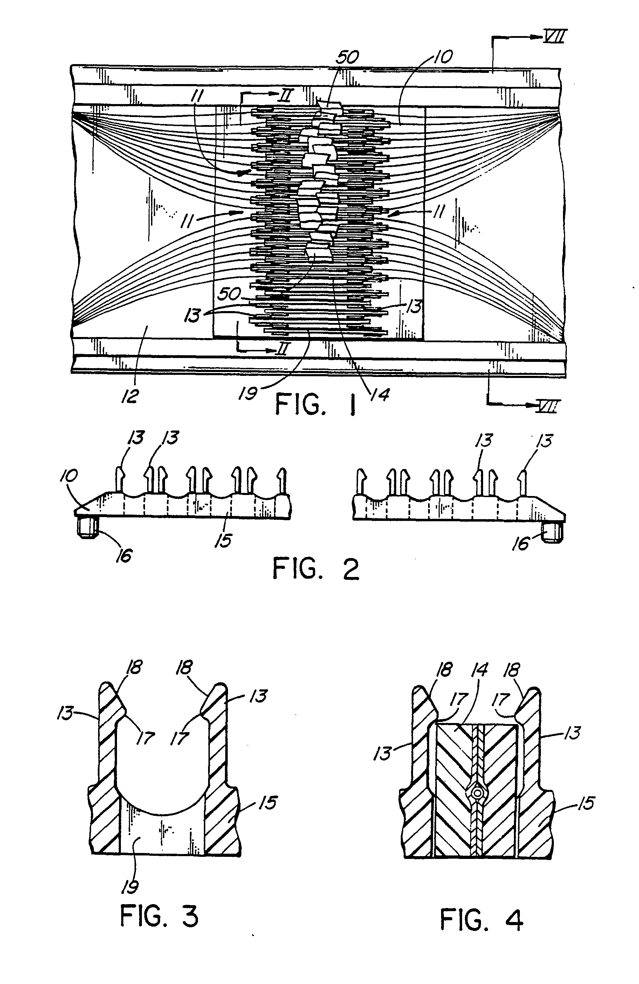

Illustrated in Figure 1 is a retainer member, indicated generally at 10, having a plurality of retainers, indicated generally at 11. In this figure, the member 10 is seen attached to an organizer tray 12. Each retainer has two pairs of cantilever members 13 spaced apart across the member, in the direction of the length of the tray. In Figure 1, a packaged splice, indicated at 14, is positioned in several retainers.

The form of the members 13, and the arrangement of retainers, is seen more clearly in Figures 2, 3 and 4. In Figure 2 there is shown the pairs of members 13, and one particular way by which the retainer member can be attached to a tray. From a bottom web 15 of the retainer member 10 extend projections 16 which pass through holes in the base of the tray. These projections can be rivetted over to retain the retainer member in position. Alternatively they can be split, with outwardly extending ribs at the 'bottom, to give a snap assembly.

As readily seen in Figure 3, each cantilever member 13 has an inwardly projecting rib 17 near its top edge, with an inwardly and downwardly inclined surface 18 extending from the top edge to the rib. A slot 19 extends through the web 15 between the members 13, the slot extending a short distance beyond the pairs of members 13, at each end, as seen in Figure 1.

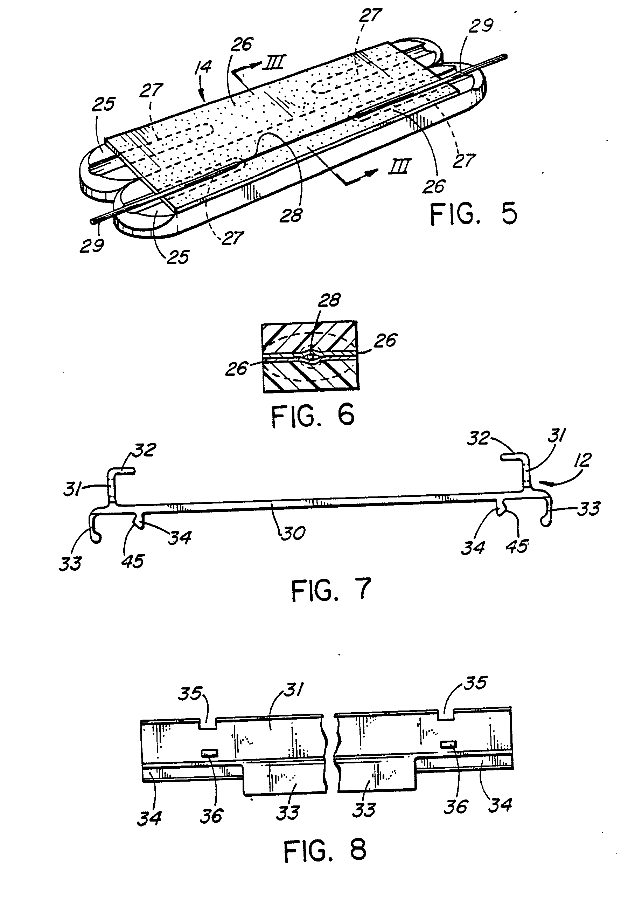

Figure 4 illustrates the arrangement of a packaged splice 14 situated in a retainer. The packaged splice is of the form as described in U.S. Patent 4,254,865 issued March 10, 1981 to the present assignee and as illustrated in Figures 5 and 6. The packaged splice is inserted into a retainer by pushing it down between the pairs of cantilever members 13. The members deflect apart as the lower edge of the packaged splice 14 push against surfaces 18. Once the packaged splice has moved fully into the retainer, the top edge is below the ribs 17 and the members 13 snap over the packaged splice. The members 13 are thus not under stress. The splice sits in the slot 19 and is therefore restrained from lengthwise movement. With the retainer member fitted to a tray, the packaged splice rests on the base of the tray. However, if retainers are made as individual units, or even as multiple units, without having a tray base or other surface under them, the slot 19 can be arranged to extend only part way through the web 15. This arrangement can also be used with trays.

The splice protecting package, in one form, is illustrated in Figures 5 and 6. It comprises two flat members 25 hingedly connected by a layer of adhesive material 26. The members 25 have shallow semi-circular grooves 27 extending in from each end. A fusion spliced fiber 28 is positioned on one member, the coated portions of the fused fiber, indicated at 29, positioned over the grooves 27. The members are then hinged or folded together, gripping the fused fibers between them, as seen in Figure 6. This packaging or protection is described in more detail in the above mentioned patent.

One form of tray is illustrated in cross-section in Figure 7, and in side view in Figure 8. The tray has a base 30 with an upstanding web 31 adjacent each side edge, the webs having inwardly extending ribs 32. Extending downward from the side edges are further webs 33, and also downwardly extending ribs 34 extend parallel to and spaced a short distance in from webs 33.

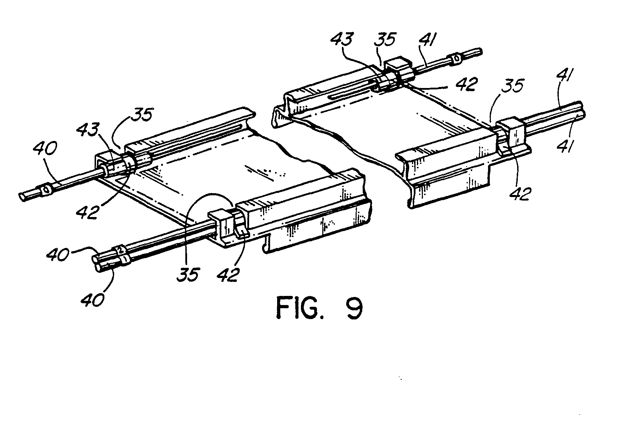

Near each end of the tray, at each side, a slot 35 extends through the rib 32 and part way down web 31. Below each slot 35 there is an aperture 36 through the web 31. The use of these will be explained in conjunction with Figure 9. The webs 33 extend only for part of the length of the tray, stopping short of the ends. However the ribs 34 extend the full length of the tray. However these particular features can vary to suit requirements. In a single tray usage webs 33 and ribs 34 may not be present.

Figure 9 illustrates a tray 12, with a multiple unit retainer 10, and with optical fiber cables entering and leaving, the cables indentified at 40 entering at one end, and at 41 at the other end. The cables will contain several fibers and the cable casing is removed at the end to expose a length of each fiber. The ends of the casing are positioned at the ends of the tray, against the webs 31 under the ribs 32. Ties 42 pass through the aperture 36 in webs 31, round the cables and through the slots 35. If necessary a sleeve 43 can be positioned on a cable to assist in the gripping of the cable by the tie. The ties 42 act as strain reliefs and prevent the cables and fibers from being pulled out of the tray.

Trays can be mounted, one above the other. The inwardly extending ribs 32 of a lower tray snap into position above convex formations 45 on the outer surfaces of the ribs 34. A cover, having ribs similar to ribs 34 on a tray, can be snapped into position on a top tray. Several trays, stacked one on top of another, can be positioned in an enclosure or housing, as described in U.S. Patent 4,359,262, issued November 16, 1982. to the present assignee.

The top surface of the tray base can be ribbed to make it easy to pick up fibers resting on the tray base. The retainers are offset or staggered, in the retainer member, as illustrated in Figure 1, to make it easier to grip tabs 50 attached to the packaged splices, the tabs identifying splices.

## Claims

1. A retainer for an optical fibre splice package characterised by a web member (15), two pairs of cantilever members (13) spaced apart by a first predetermined distance in a first direction along the web member and extending in a direction substantially normal thereto, the cantilever members of a pair being spaced apart by a second predetermined distance in a direction substantially transverse to the first direction and being arranged to receive a packaged splice (14) therebetween, an inwardly extending rib (17) at an upper part of each cantilever member (13), the extremities of the ribs being spaced apart a distance less than said second predetermined distance and arranged to retain the packaged splice (14) between the cantilever members, a slot (19) in said web extending in said first direction between the pairs of cantilever members for a distance greater than said first predetermined distance, the ribs (17) being spaced apart from the bottom of the slot (19) by a third predetermined distance, whereby the packaged splice (14) can be pushed down between the cantilever members (13) into the slot (19) and restrained from longitudinal movement, and the ribs (17) engaging over the packaged splice and cantilever members (13) being substantially free of stress.

2. A retainer member for holding a plurality of packaged optical fiber splices characterised by a plurality of retainers (11) as claimed in claim 1, the web member (15) being unitary and common to all of the retainers.

3. A retainer member as claimed in claim 2 characterised by each retainer (11) being offset laterally relative to the immediately adjacent retainer (11) in such a manner that the retainers form a zig-zag arrangement across said bottom web (15).

4. A retainer member as claimed in claim 2 characterized by an organizing tray (12) having a base (30), the web member (15) being attached to the base of the organizing tray.

5. A retainer member as claimed in claim 2 characterized by means (16) extending from the web member (15 for attachment to a support member (12).

6. A retainer member as claimed in claim 4 characterized by the web member (15) being bonded to the base (30) of the organizing tray (12).

7. A retainer member as claimed in claim 4 characterized by the web member (15) including projections (16) on the other side of the web member from the cantilever members, the projections extending through the base (30) of the tray (12) to attach the web member to the tray.

8. A retainer member as claimed in claim 4 characterized by the slots (19) extending through the web member (15), the contacting surface of the base (30) of the tray (12) defining the base of the slots.

9. A retainer member as claimed in claim 4 characterized by the tray (12) including a first substantialy perpendicular web (31) adjacent to each side edge of the base and extending lengthwise of the base (30), and an inwardly extending rib (32) along the outer edge of each substantially perpendicular web (31).

10. A retainer member as claimed in claim 9 characterized by the tray (12) including a second substantially perpendicular web (33) on the other side of the base from the perpendicular web adjacent to each side edge of the base (30), and a parallel rib (34) extending from each side edge of the base (30) spaced inward from the second substantially perpendicular webs (33), whereby the first webs (31) and inwardly extending ribs (32) of a lower tray (12) can be positioned between the second webs (33) and parallel ribs (33) of an upper tray (12).

## Patentansprüche

1. Halter für eine optikfaser-Spleißungs-Umhüllung, gekennzeichnet durch ein Stegteil (15), zwei Paare vorkragender Teile (13), die einen ersten vorbestimmten Abstand in einer ersten Richtung längs des Stegteiles voneinander besitzen und sich in einer im wesentlichen dazu senkrechten Richtung erstrecken, wobei die vorkragenden Teile eines Paares in einer im wesentlichen zur ersten Richtung quer verlaufenden Richtung einen zweiten vorbestimmten Abstand besitzen und zur Aufnahme einer umhüllten Spleißstelle (14) dazwischen angeordnet sind, durch eine nach innen vorstehende Rippe (17) an einem oberen Abschnitt jedes vorkragenden Teiles (13), wobei die Enden der Rippen einen geringeren als den zweiten vorbestimmten Abstand voneinander aufweisen und angeordnet sind, die umhüllte Spleißung (14) zwischen den vorkragenden Teilen zurückzuhalten, ein Schlitz (19) sich in dem Steg in der ersten Richtung zwischen den Paaren vorkragender Teile über einen größeren als dem ersten vorbestimmten Abstand erstreckt und die Rippen (17) von dem Boden des Schlitzes (19) einen dritten vorbestimmten Abstand aufweisen, wodurch die umhüllte Spleißung (14) zwischen den vorkragenden Teilen (13) in den Schlitz (19) nach unten gestoßen und gegen eine Längsbewegung zurückgehalten werden können und die Rippen (17) sich über die umhüllte Spleißung anlegt und die vorkragenden Teile (13) im wesentlichen spannungsfrei sind.

2. Halteteil zum Halten einer Vielzahl von umhüllten Spleißungen optischer Fasern, gekennzeichnet durch eine Vielzahl von Haltern (11) nach Anspruch 1, wobei das Stegteil (15) einheitlich und allen Haltern gemeinsam ist.

3. Halteteil nach Anspruch 2, dadurch gekennzeichnet, daß jeder Halter (11) in Seitenrichtung relativ zu dem unmittelbar vorhergehenden Halter (11) in solcher Weise versetzt ist, daß die Halter über den Bodensteg (15) eine Zick-Zack-Anordnung bilden.

4. Halteteil nach Anspruch 2, gekennzeichnet durch eine ordnungsschale (12) mit einem Grundteil (30), wobei das Stegteil (15) an dem Grundteil der Ordnungsschale angebracht ist.

5. Halteteil nach Anspruch 2, gekennzeichnet durch von dem Stegteil (15) zum Anbringen an einem Stützteil (12) vorstehende Mittel (16).

6. Halteteil nach Anspruch 4, dadurch gekennzeichnet, daß das Stegteil (15) mit dem Grundteil (30) der Ordnungsschale (12) verbunden ist.

7. Halteteil nach Anspruch 4, dadurch gekennzeichnet, daß das Stegteil (15) an der den vorkragenden Teilen gegenüberliegenden Seite Vorsprünge (16) enthält, die sich zum Anbringen des Stegteiles an der Schale durch das Grundteil (30) der Schale (12) erstrecken.

8. Halteteil nach Anspruch 4, dadurch gekennzeichnet, daß die Schlitze (19) sich durch das Stegteil (15) hindurch erstrecken, wobei die Berührungsfläche des Grundteiles (30) der Schale (12) den Grund der Schlitze bestimmt.

9. Halteteil nach Anspruch 4, dadurch gekennzeichnet, daß die Schale (12) einen ersten im wesentlichen senkrechten Steg (31) jeder Seitenkante des Grundteiles benachbart enthält, der sich in Längsrichtung des Grundteiles (30) erstreckt, und eine sich nach innen erstreckende-Rippe (32) längs der Außenkante jedes im wesentlichen senkrechten Steges (31).

10. Halteteil nach Anspruch 9, dadurch gekennzeichnet, daß die Schale (12) einen zweiten im wesentlichen senkrechten Steg (33) an der anderen Seite des Grundteiles vom senkrechten Steg aus benachbart jeder Seitenkante des Grundteiles (30) enthält, und daß eine parallele Rippe (34) von jeder Seitenkante des Grundteiles (30) mit Abstand nach innen von den zweiten im wesentlichen senkrechten Stegen (33) erstreckt, wodurch die ersten Stege (31) und die sich nach innen erstreckenden Rippen (32) einer unteren Schale (12) zwischen die zweiten Stege (33) und die parallelen Rippen (33) einer oberen Schale (12) eingesetzt werden können.

## Revendications

1. Organe de retenue pour ensemble à épissure de fibres optiques, caractérisé par un élément d'âme (15), deux paires d'éléments en porte-à-faux (13) espacés d'une première distance prédéterminée dans une première direction le long de l'élément d'âme et s'étendant dans une direction sensiblement perpendiculaire à celui-ci, les éléments en porte-à-faux d'une paire étant espacés d'une seconde distance prédéterminée dans une direction sensiblement transversale à la première direction et étant disposés de manière à recevoir une épissure conditionnée (14) entre eux, une nervure s'étendant vers l'intérieur (17) à une partie supérieure de chaque élément en porte-à-faux (13), les extrémités des nervures étant espacées d'une distance inférieure à la seconde distance prédéterminée et étant disposées de manière à maintenir l'épissure conditionnée (14) entre les éléments en porte-à-faux, une fente (19) ménagée dans l'âme s'étendant dans la première direction entre les paires d'éléments en porte-à-faux sur une distance supérieure à la première distance prédéterminée, les nervures (17) étant espacées du fond de la fente (19) suivant une troisième distance prédéterminée, d'où il résulte que l'épissure conditionnée (14) peut être poussée vers le bas entre les éléments en porte-à-faux (13) pour entrer dans la fente (19) et être empêchée de se déplacer suivant un mouvement longitudinal, et les nervures (17) engagées sur l'épissure conditionnée et les éléments en porte-a-faux (13) étant sensiblement exemptes de contraintes.

2. Organe de retenue afin de maintenir une multitude d'épissures conditionnées de fibres optiques, caractérisé par une multitude d'organes de retenue (11) selon la revendication 1, l'élément d'âme (15) étant monobloc et commun à tous les organes de retenue.

3. Organe de retenue selon la revendication 2, caractérisé en ce que chaque organe de retenue (11) est décalé latéralement par rapport à l'organe immédiatement contigu (11) d'une manière telle que les organes de retenue forment un agencement en zigzag à travers l'âme inférieure (15).

4. Organe de retenue selon la revendication 2, caractérisé par un plateau de réception (12) ayant une base (30), l'élément d'âme (15) étant fixé à la base du plateau de réception.

5. Organe de retenue selon la revendication 2, caractérisé par un moyen (16) s'étendant à partir de l'élément d'âme (15) pour fixation à un élément de support (12).

6. Organe de retenue selon la revendication 4, caractérisé en ce que l'élément d'âme (15) est lié à la base (30) du plateau de réception (12).

7. Organe de retenue selon la revendication 4, caractérisé en ce que l'élément d'âme (15) comprend des saillies (16) sur l'autre côté de l'élément d'âme par rapport aux éléments en porte-à-faux, les saillies s'étendant à travers la base (30) du plateau (12) pour fixer l'élément d'âme au plateau.

8. Organe de retenue selon la revendication 4, caractérisé en ce que les fentes (19) s'étendent à travers l'élément d'âme (15), la surface de contact de la base (30) du plateau (12) définissant la base des fentes.

9. Organe de retenue selon la revendication 4, caractérisé en ce que le plateau (12) comprend une première âme sensiblement perpendiculaire (31) contiguë à chaque bord latéral de la base et s'étendant dans le sens de la longueur de la base (30), et une nervure s'étendant vers l'intérieur (32) le long du bord extérieur de chaque âme sensiblement perpendiculaire (31).

10. Organe de retenue selon la revendication 9, caractérisé en ce que le plateau (12) comprend une seconde âme sensiblement perpendiculaire (33) sur l'autre côté de la base par rapport à l'âme perpendiculaire contiguë à chaque côté latéral de la base (30), et une nervure parallèle (34) s'étendant à partir de chaque bord latéral de la base (30) espacée vers l'intérieur par rapport aux secondes âmes sensiblement perpendiculaires (33), d'où il résulte que les premières âmes (31) et les nervures s'étendant vers l'intérieur (32) d'un plateau inférieur (12) peuvent être placées entre les secondes âmes (33) et des nervures parallèles (33) d'un plateau supérieur (12).

EP 0 150 568 B1

FIG. 1

FIG. 2

FIG. 3

FIG. 4

FIG. 5

FIG. 6

FIG. 7

FIG. 8

FIG.  9